# EUROPEAN PATENT APPLICATION

(11) **EP 3 242 317 A1**
(43) Date of publication of application: **08.11.2017**
(21) Application number: 15875115.6
(22) Date of filing: 21.12.2015
(51) Int. Cl.: H01J 49/06

(54) **ELECTRODE RING USED FOR ION MOBILITY SPECTROMETER, ION MIGRATION TUBE AND ION MOBILITY SPECTROMETER**

(30) Priority: 31.12.2014 CN 201410853488
(71) Applicant: Nuctech Company Limited, TongFang Building, Shuangqinglu, Haidian District Beijing 100084 (CN)
(72) Inventor: ZHOU, Haichao, Beijing 100084 (CN); ZHANG, Yangtian, Beijing 100084 (CN); BAO, Yuntai, Beijing 100084 (CN); WU, Wangyang, Beijing 100084 (CN); XIAO, Yi, Beijing 100084 (CN); CHEN, Changzhuo, Beijing 100084 (CN); WANG, Qifang, Beijing 100084 (CN); HE, Wen, Beijing 100084 (CN)
(74) Representative: Delumeau, François Guy
(86) International application number: PCT/CN2015/098077
(87) International publication number: WO 2016/107437

(57) **Abstract**

An electrode ring (1) used for an ion mobility spectrometer, an ion migration tube and an ion mobility spectrometer, wherein the outer edge thickness of the electrode ring (1) is greater than the inner edge thickness thereof in an axial direction. The structure of the electrode ring (1) is changed from the case where the inner edge thickness is equal to the outer edge thickness in the axial direction into the case where the inner edge thickness is less than the outer edge thickness in the axial direction, which significantly improves the electric field uniformity inside the migration tube. By means of the structure of the electrode ring (1) with the outer edge thickness being greater than the inner edge thickness in the axial direction, a smooth ion migration region inside the migration tube is expanded. The electric field uniformity of an ion migration tube composed of the electrode ring (1) with the inner edge thickness being equal to the outer edge thickness in the axial direction is significantly worse than that of an ion migration tube composed of the electrode ring (1), having the same outer edge thickness, with the inner edge thickness being less than the outer edge thickness in the axial direction.

## Description

### TECHNICAL FIELD

The present disclosure relates to an electrode ring for an ion mobility spectrometer, an ion transfer tube and an ion mobility spectrometer, which pertains to the field of substance detection technology.

### BACKGROUND

Ion mobility spectrometry technique is a substance analysis and detection technique developed since the early 1970s. It employs a basic principle that in a particular electric field, ions generated under an atmospheric pressure, due to their different mobility, will take a different time period to drift from the same starting point through the same distance. Thereby, a substance can be qualitatively measured by measuring such a time period. The ion mobility spectrometry technique has advantages of high detection sensitivity and high detection speed, and it can achieve fast on-line detection and has a low detection cost. In recent years, the ion mobility spectrometry has gained increased popularity. Currently, the ion mobility spectrometry has found wide application in fields such as detection of explosives, monitoring of narcotics inspection, biological warfare agents, or the like. In recent years, the ion mobility spectrometry has also found wide application in detection of organic pollutants.

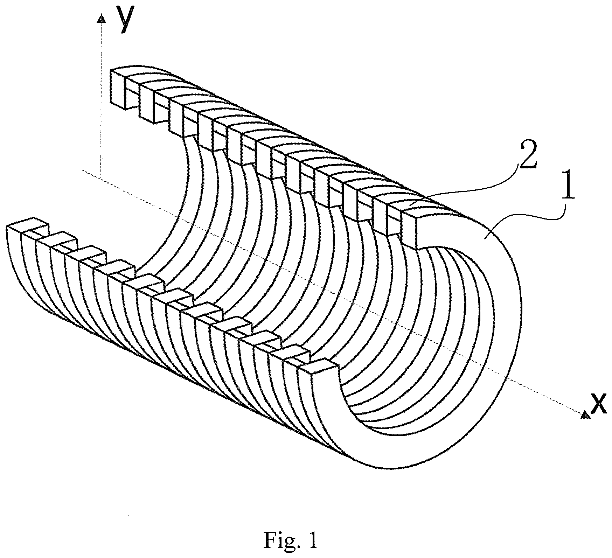

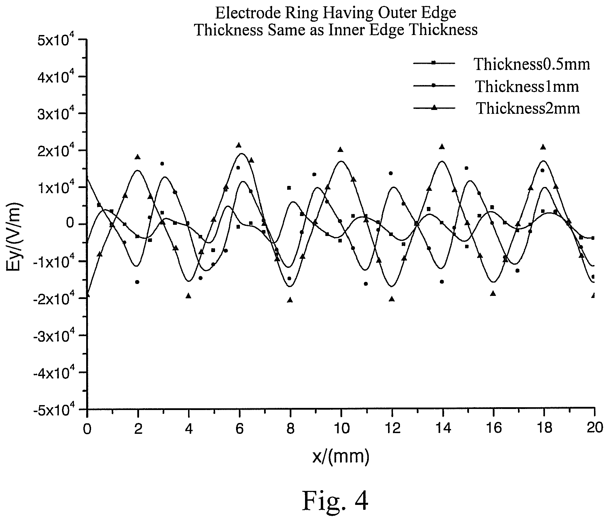

As well known, an ion mobility spectrometer typically includes an ion transfer tube in which ions are transferred in a constant electric field. The ion transfer tube is a core component of the ion mobility spectrometer, and movement of charged ions in the ion transfer tube is mainly influenced by the electric field of the ion transfer tube. Improving uniformity of the electric field of the ion transfer tube can improve sensitivity of the ion mobility spectrometer. Various structures of ion transfer tubes have been proposed. As shown in Fig. 1, an ion transfer tube can include a plurality of electrode rings 1 distributed axially at an interval along a length of a spectrometer, of which every two adjacent electrode rings are kept at a constant potential difference to generate a constant axial electric field. Electric field in the transfer zone of the transfer tube is formed by the progressively increased or decreased potentials applied by the uniformly-distributed electrode rings. As shown in Figs. 1-3, a conventional transfer tube is typically formed by thin metal electrode rings 1 and insulating rings 2 alternatively arranged. As shown in Fig. 4, study shows that the thinner the metal electrode rings 1 are, the better the uniformity of the electric field intensity of the transfer tube is. However, the thinner the metal electrode rings 1 are, the more difficult the manufacture and the assembly will be and the higher cost will be caused, which seriously hinders the development of the ion mobility spectrometers.

### SUMMARY OF THE INVENTION

The technical problem to be solved by the present disclosure is to improve the uniformity of the electric field inside the ion transfer tube, to enlarge the smooth ion transfer zone inside the ion transfer tube, and to address the problem that in the related art, it is difficult to manufacture and assemble thin electrode rings.

In order to achieve the above objective of the present disclosure, the present disclosure provides an electrode ring for an ion mobility spectrometer, an ion transfer tube and an ion mobility spectrometer.

In one aspect, the present disclosure provides an electrode ring for an ion mobility spectrometer, wherein the electrode ring has an outer edge thickness larger than its inner edge thickness in an axial direction.

Optionally, the electrode ring has a cross section of a triangular shape.

Optionally, the electrode ring has a cross section of a wedge shape.

Optionally, two sides connected to each other at the outer edge of the electrode ring are two inferior arcs connected to each other.

Optionally, in a cross section of the electrode ring, a side at the outer edge has an angle of 90 degree to each of the two sides which are respectively adjacent to the side at the outer edge, and the other two ends of the two sides which are respectively adjacent to the side at the outer edge project toward the inner edge.

Optionally, a side at the inner edge of a cross section of the electrode ring is a straight line.

Optionally, the projection is of a half-circle shape, a triangular shape or a trapezoidal shape.

In another aspect, the present disclosure provides an ion transfer tube, including a plurality of electrode rings, each of the electrode rings being an electrode ring described above.

Optionally, the electrode rings have inner edge thicknesses gradually decreased in an ion moving direction.

In still another aspect, the present disclosure provides an ion mobility spectrometer, including an ion transfer tube described above.

With the electrode ring for an ion mobility spectrometer, the ion transfer tube and the ion mobility spectrometer provided by the present disclosure, in the structure of the electrode ring, by disposing the inner edge thickness less than the outer edge thickness in the axial direction, rather than disposing the inner edge thickness the same as the outer edge thickness in the axial direction, the uniformity of the electric filed inside the transfer tube can be significantly improved. In the present disclosure, through the structure of the electrode ring in which the outer edge thickness is larger than the inner edge thickness in the axial direction, the smooth ion transfer zone inside the transfer tube can be enlarged. The ion transfer tube formed of electrode rings each having an inner edge thickness the same as the outer edge thickness in the axial direction apparently has poorer uniformity of electrode field than the ion transfer tube formed of electrode rings each having the same outer edge thickness but an inner edger thickness smaller than the outer edge thickness in the axial direction.

### BRIEF DESCRIPTION OF THE DRAWINGS

Fig.1 is a schematic diagram of a transfer tube in the related art, with the electrode rings assembled;
Fig.2 is a schematic diagram of an electrode ring in the related art;
Fig.3 is a cross sectional view of the electrode ring in the related art;
Fig.4 is a graph showing fluctuation in radial components of electric field intensities of electrode rings of different thicknesses in the related art, each of the electrode rings having an inner edge thickness the same as an outer edge thickness;
Fig.5 is a schematic diagram of an electrode ring according to the present disclosure;
Fig.6 is a cross sectional view of the electrode ring according to the present disclosure;
Fig.7 are cross sectional views of electrode rings according to various embodiments of the present disclosure;
Fig.8 is a graph showing fluctuation in radial components of electric field intensities of electrode rings having chamfered inner edges;
Fig.9 is a schematic diagram of an ion transfer tube formed of electrode rings having chamfered inner edges; and
Fig.10 is a graph showing fluctuation in radial components of electric field intensities of an electrode ring in the related art which has an inner edge thickness the same as an outer edge thickness compared with that of an electrode ring according to the present disclosure which has a chamfered inner edge.

### DETAILED DESCRIPTION OF THE INVENTION

Hereinafter, specific implementations of the preset disclosure are further described in detail with reference to the accompanying drawings and embodiments. The following embodiments are for illustration of the present disclosure, and by no means for limitation of the scope of the present disclosure.

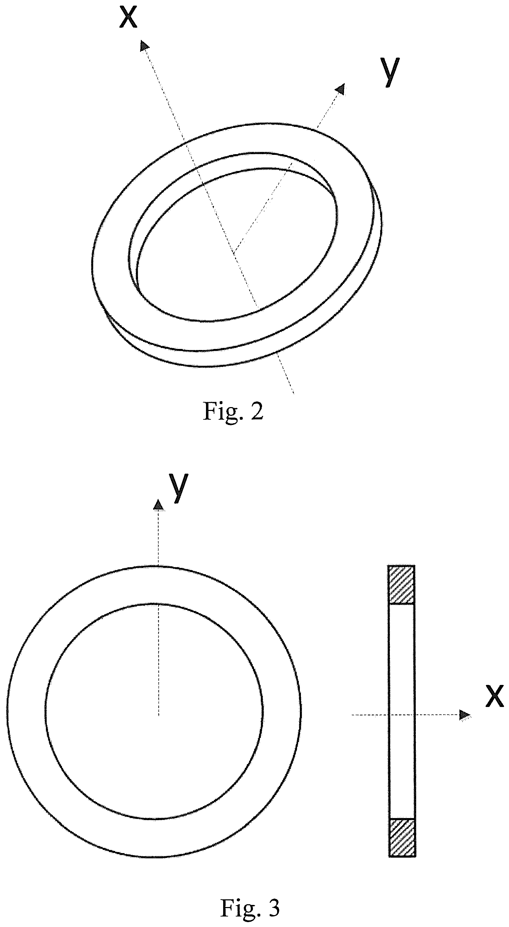

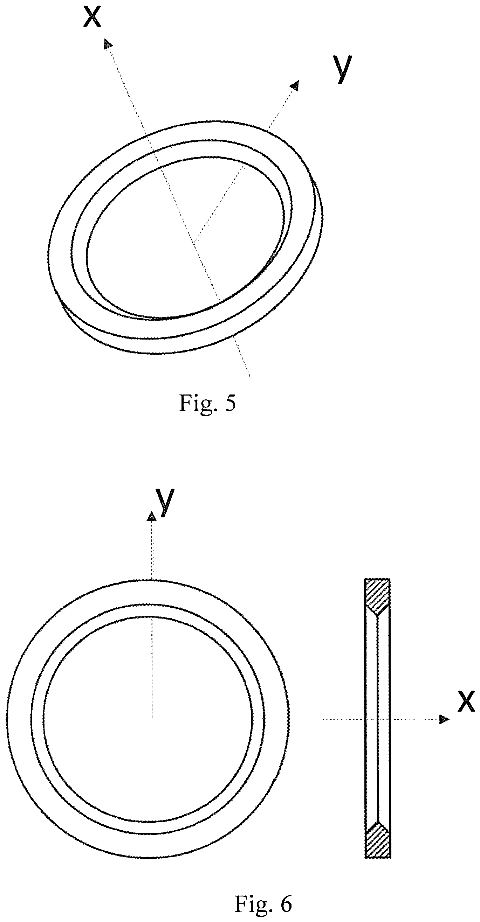

As shown in Figs. 2 and 3, since in the related art, the electrode ring 1 has an outer edge thickness the same as an inner edge thickness along an axial direction (direction x), in order to ensure the uniformity of the electric field intensity of the ion transfer tube, the electrode ring 1 has to be formed very thin. However, the thinner the electrode ring 1 is, the more difficult the manufacture and the assembly will be. In order to decrease the difficulty in the manufacture and the assembly, the thickness of the electrode ring 1 has to be properly increased. In the present disclosure, in order to achieve both of decreased difficulty in the manufacture and the assembly and the uniformity of the electric field intensity of the ion transfer tube, the present disclosure provides an electrode ring for an ion mobility spectrometer. As shown in Figs. 5-7, the electrode ring has an outer edge thickness larger than an inner edge thickness along the axial direction (direction x). The electrode ring for an ion mobility spectrometer provided by the present disclosure will be further described in detail as below.

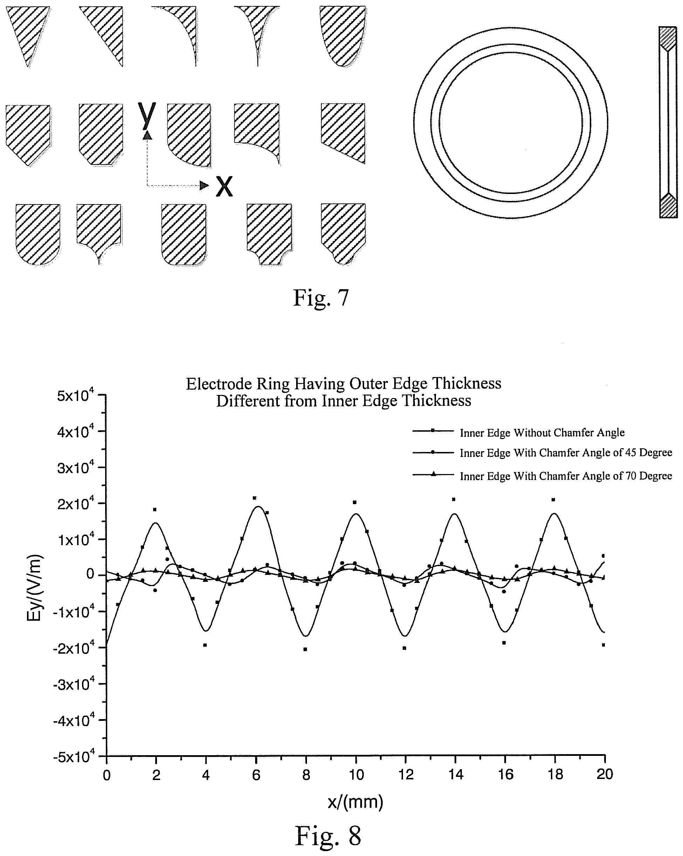

As shown in Fig. 7, as a preferred solution of the present disclosure, the electrode ring 1 provided by the present disclosure has a cross section of a triangular shape (as shown in the first view and the second view in the first row of Fig. 7). As shown in Figs. 5 and 6, the electrode ring 1 can also have a wedge-shaped cross section. As shown in Fig. 7, in the solution where the electrode ring 1 has a wedge-shaped cross section, Optionally, two sides connected to each other at the outer edge of the electrode ring 1 are two inferior arcs connected to each other (as shown in the fourth view and the fifth view in the first row of Fig. 7). In some embodiments, as shown in Fig. 7 (the second row and the third row of Fig. 7), in the cross section of the electrode ring 1, the side at the outer edge has an angle of 90 degree to each of the two sides which are respectively adjacent to the side at the outer edge, the other two ends of the two sides which are respectively adjacent to the side at the outer edge project toward the inner edge. In some embodiments, (as shown in the second view in the second row, the third view and the fourth view in the third row of Fig. 7), the side at the inner edge of the cross section of the electrode ring 1 can be a straight line. In some embodiments, the projection can be of a half-circle shape (as shown in the first view and the fifth view in the third row of Fig. 7), a triangular shape (as shown in the first view and the fifth view in the second row of Fig. 7), or a trapezoidal shape (as shown in the second view in the second row of Fig. 7). It should be understood that, the present disclosure is not limited thereto. Apart from the solutions set forth in Fig. 7, it will fall within the scope of the present disclosure as long as the electrode ring 1 has the outer edge thickness larger than the inner edge thickness along the axial direction (direction x).

As shown in Figs. 5-7, embodiments of the electrode ring 1 provided by the present disclosure are not limited to the preferred solutions set forth in the above embodiments of the present disclosure. In some embodiments, the inner edge of the electrode ring 1 can be chamfered at any direction, such that the electrode ring 1 has the outer edge thickness larger than the inner edge thickness along the axial direction, which falls within the scope of the present disclosure. As shown in Fig. 7, Optionally, in the cross section of the electrode ring 1, the inner edge is shaped as a sharp angle (as shown in the first view, the second view, the third view and the fourth view in the first row, the fourth view in the second row and the second view in the third row). Round-angled solution (as shown in the fifth view in the first row, the first view, the third view and the fifth view in the third row) has a poorer uniformity of electric filed intensity than the sharp-angled solution. As shown in Fig. 8, when having the same outer edger thickness of 2mm in the axial direction (direction x), an electrode ring 1 having a chamfer angle of 70 degree and an electrode ring 1 having a chamfer angle of 45 degree are compared with an electrode ring 1 without a chamfer angle. Apparently, a transfer tube assembled with the electrode ring of a chamfered inner edge has a small fluctuation in radial components of the intensities at the same position of the electric field, meaning a better uniformity of the electric field. The larger the chamfer angle is, the better the uniformity of the electric field intensity is.

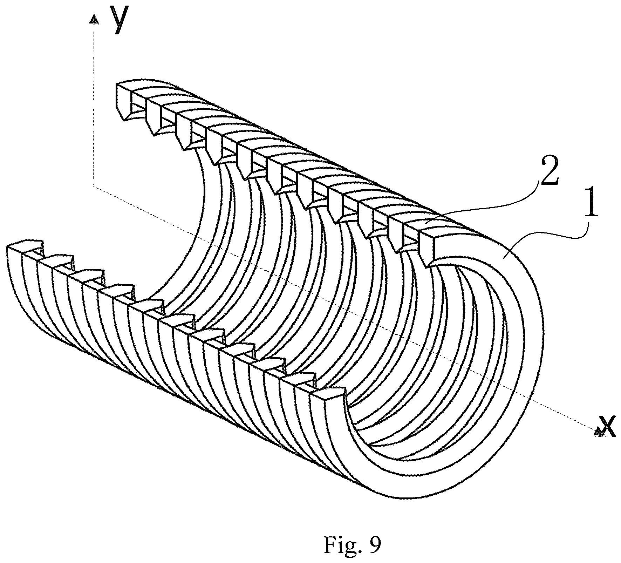

As shown in Fig. 9, in order to further illustrate the advantage of the electrode ring provided by the present disclosure, the present disclosure also provides an ion transfer tube which applies the above electrode ring. The ion transfer tube includes a plurality of the above electrode rings. In order to further ensure the uniformity of the electric field of the ion transfer tube, in a preferred solution, the electrode rings have inner edge thicknesses gradually decreased in an ion moving direction.

When the inner edge thickness is the same as the outer edge thickness in the axial direction, various ion transfer tubes formed of electrode rings having different thicknesses can be measured at positions close to the inner edges of the electrode rings of the ion transfer tubes (for example, an electrode ring with a radius of 10cm can be measured at a position distanced 8cm to the center of the electrode ring), to obtain electric field intensity distribution inside the ion transfer tubes. As shown in Fig. 4, the smaller the thickness of the electrode ring is, the more uniform the electric field at the same position (for example, at a position distanced 8cm to the center of the electrode ring) of the ion transfer tube will be. As shown in the graph, among the ion transfer tubes formed of electrode rings of different thicknesses, the uniformities of the electric fields can be ordered as follows: 0.5mm>1mm>2mm.

When the outer edge thicknesses in the axial direction are the same, various ion transfer tubes formed of electrode rings having different inner edge thicknesses can be measured at positions close to the inner edges of the electrode rings of the ion transfer tubes (for example, an electrode ring with a radius of 10cm can be measured at a position distanced 8cm to the center of the electrode ring), to obtain electric field intensity distribution inside the ion transfer tubes. As shown in Fig. 8, when the electrode ring of the present disclosure has an outer edge thickness of 2mm in the axial direction (direction x), the larger the chamfer angle of the inner edge is, the more uniform the electric field at the same position (for example, at a position distanced 8cm to the center of the electrode ring) of the ion transfer tube will be. The uniformities of the electric fields of ion transfer tubes with different chamfer angles can be ordered as follows: 70° >45° >no chamfer angle. It can be seen from the graph that, by comparing the electrode ring with no chamfer angle with the electrode rings with the 70° chamfer angle and with the 45° chamfer angle, the transfer tube assembled with the electrode ring of a chamfered inner edge apparently has a small fluctuation in radial components of the intensities at the same position of the electric field, meaning a better uniformity of the electric field. The larger the chamfer angle is, the better the uniformity of the electric field intensity is.

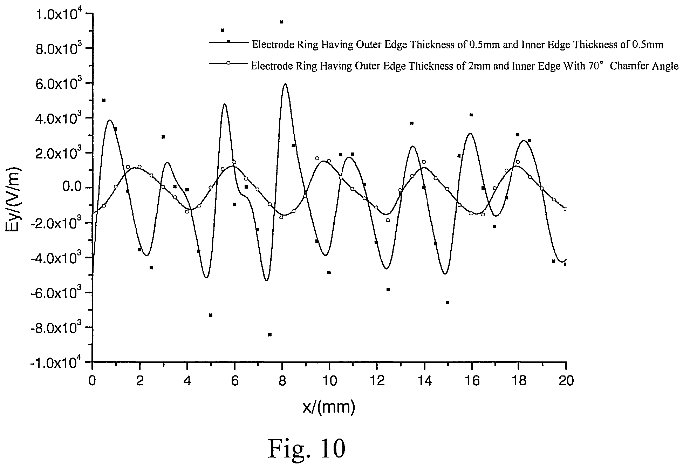

When the outer edge thickness in the axial direction are different, various ion transfer tubes formed of different electrode rings can be measured at positions close to the inner edges of the electrode rings of the ion transfer tubes (for example, an electrode ring with a radius of 10cm can be measured at a position distanced 8cm to the center of the electrode ring), to obtain electric field intensity distribution inside the ion transfer tubes. As shown in Fig. 10, a transfer tube formed of electrode rings each having an inner edge thickness of 0.5 mm and an outer edge thickness of 0.5 mm, has a difference of radial components of the electric field intensities being about 1×104; and a transfer tube formed of electrode rings each having an outer edge thickness of 2 mm and an inner edge with a 70° chamfer angle, has a difference of radial components of the electric field intensities being about 3×103. It can be seen from the graph that, the ion transfer tube formed of electrode rings each having an outer edge thickness of 2 mm and an inner edge with a 70° chamfer angle has better uniformity of electric filed than the transfer tube formed of electrode rings each having an inner edge thickness of 0.5 mm and an outer edge thickness of 0.5 mm; and the transfer tube formed of electrode rings each having an outer edge thickness of 2 mm and an inner edge with a 70° chamfer angle has a larger smooth ion transfer zone inside the tube than the transfer tube formed of electrode rings each having an inner edge thickness of 0.5 mm and an outer edge thickness of 0.5 mm.

In order to further illustrate the advantage of the ion transfer tube provided by the present disclosure, the present disclosure also provides an ion mobility spectrometer which applies the above ion transfer tube. The ion mobility spectrometer includes the above ion transfer tube.

Accordingly, with the electrode ring for an ion mobility spectrometer, the ion transfer tube and the ion mobility spectrometer provided by the present disclosure, in the structure of the electrode ring, by disposing the inner edge thickness less than the outer edge thickness in the axial direction, rather than disposing the inner edge thickness the same as the outer edge thickness in the axial direction, the uniformity of the electric filed inside the transfer tube can be significantly improved. In the present disclosure, through the structure of the electrode ring in which the outer edge thickness is larger than the inner edge thickness in the axial direction, the smooth ion transfer zone inside the transfer tube can be enlarged. The ion transfer tube formed of electrode rings each having an inner edge thickness the same as the outer edge thickness in the axial direction apparently has poorer uniformity of electrode field than the ion transfer tube formed of electrode rings each having the same outer edge thickness but an inner edger thickness smaller than the outer edge thickness in the axial direction.

The above embodiments are merely for illustration of the present disclosure, rather than for limitation of the present disclosure. Various alteration and modification can be made by those skilled in the art without departing from the spirit and the scope of the present disclosure. Therefore, all of the equivalent technical solutions belong to the scope of the present disclosure, and the patent protection scope of the present disclosure should be defined by the claims.

## Claims

1. An electrode ring for an ion mobility spectrometer, **characterized in that** the electrode ring has an outer edge thickness larger than its inner edge thickness in an axial direction.

2. The electrode ring according to claim 1, wherein the electrode ring has a cross section of a triangular shape.

3. The electrode ring according to claim 1, wherein the electrode ring has a cross section of a wedge shape.

4. The electrode ring according to claim 3, wherein two sides connected to each other at the outer edge of the electrode ring are two inferior arcs connected to each other.

5. The electrode ring according to claim 1, wherein in a cross section of the electrode ring, a side at the outer edge has an angle of 90 degree to each of the two sides which are respectively adjacent to the side at the outer edge, and the other two ends of the two sides which are respectively adjacent to the side at the outer edge project toward the inner edge.

6. The electrode ring according to claim 5, wherein a side at the inner edge of a cross section of the electrode ring is a straight line.

7. The electrode ring according to claim 5, wherein the projection is of a half-circle shape, a triangular shape or a trapezoidal shape.

8. An ion transfer tube, **characterized in that** the comprises a plurality of electrode rings, each of the electrode rings being an electrode ring according to any one of claims 1-7.

9. The ion transfer tube according to claim 8, wherein the electrode rings have inner edge thicknesses gradually decreased in an ion moving direction.

10. An ion mobility spectrometer, **characterized in that** the ion mobility spectrometer comprises an ion transfer tube according to claim 8 or 9.
